# EUROPEAN PATENT APPLICATION

(11) **EP 2 481 902 A2**
(43) Date of publication of application: **01.08.2012**
(21) Application number: 12152316.1
(22) Date of filing: 24.01.2012
(51) Int. Cl.: F02C 3/30, F02C 7/143, F02C 7/18, F04D 29/58, F04D 29/70

(54) **Drain discharge equipment for compressor and gas turbine system**

(30) Priority: 28.01.2011 JP 2011016025
(71) Applicant: Hitachi Ltd., Tokyo 100-8280 (JP)
(72) Inventor: Karishuku, Mitsuhiro, Tokyo 100-8220 (JP)
(74) Representative: MERH-IP Matias Erny Reichl Hoffmann

(57) **Abstract**

A drain discharge equipment of a compressor having a separator 13A, 13B for separating drain discharged from the compressor to compressed air and liquid drain, which is disposed on some part of a drain capture pipe 7, 8 connected between stages and/or to an outlet of the compressor to compress air with a liquid sprayed, and discharging the liquid drain separated by the separator 13A, 13B to outside the compressor through a discharge pipe system 11A, 11B, **characterized in that** the separator 13A, 13B is provided with a device for intermittently discharging the liquid drain separated by the separator to the discharge pipe system.

## Description

### BACKGROUND OF THE INVENTION

### {Field of the Invention}

The present invention relates to drain discharge equipment of a compressor and a gas turbine system and more particularly to drain discharge equipment of a compressor and a gas turbine system which are preferable for an apparatus having a separator for separating drain, which gets mixed in the compressor when a liquid is sprayed to gas fed to the compressor, to a liquid and compressed air.

### {Description of Related Art}

A high-humidity gas use gas turbine system for spraying a liquid to gas (air) fed to a compressor for humidification, driving the gas turbine, thereby improving the efficiency is well known (refer to Patent Document 1 and Patent Document 2).

However, in the high-humidity gas use gas turbine system aforementioned, when the liquid is sprayed to air, the spray liquid enters the compressor, and the spray liquid collides with the movable blades and static blades of the compressor, thus drain is generated, and the drain enters extracted air of the compressor. The extracted air of the compressor is used as seal air for a bearing for bearing the rotary shaft of the compressor and/or cooling air for the blades of the gas turbine, so that it is necessary to capture drain entering the extracted air of the compressor.

As a conventional system for capturing drain entering the extracted air of the compressor, the following may be cited.

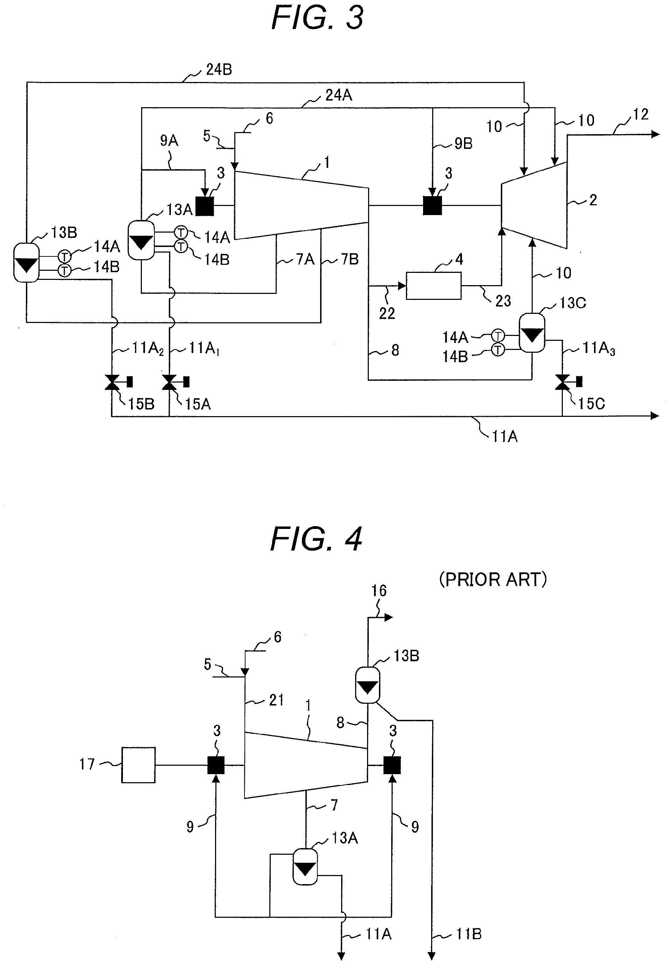

The conventional embodiment (1) shown in Fig. 4 is a conventional axial flow compressor. In this drawing, numeral 1 indicates an axial flow compressor, and the axial flow compressor 1 is driven by a compressor drive unit 17, and both ends of the rotary shaft are born by bearings 3. Further, to the axial flow compressor 1, an air intake system 21 for spraying a liquid 6 to air 5 and sucking it into the compressor is connected. Furthermore, between the stages of the axial flow compressor 1, an inter-stage drain capture pipe 7 of the compressor is connected and in the lowermost portion thereof, a separator 13A for separating drain passing through the inter-stage drain capture pipe 7 of the compressor to compressed air and a liquid with dust mixed together is disposed. The liquid with dust mixed together which is separated by the separator 13A is discharged outside the compressor through a discharge pipe system 11A, and on the other hand, the compressed air separated by the separator 13A is fed to the bearings 3 via seal air pipe systems 9 and is used as seal air for the bearings 3. Further, to the outlet of the axial flow compressor 1, an exit drain capture pipe 8 of the compressor is connected and in the lowermost portion thereof, a separator 13B for separating drain passing through the exit drain capture pipe 8 of the compressor to compressed air and a liquid with dust mixed together is disposed. The liquid with dust mixed together which is separated by the separator 13B is discharged outside the compressor through a discharge pipe system 11B, and on the other hand, the compressed air separated by the separator 13B is fed, for example, to equipment such as a chemical process via an equipment drive air extraction pipe system 16 and is used as equipment drive air.

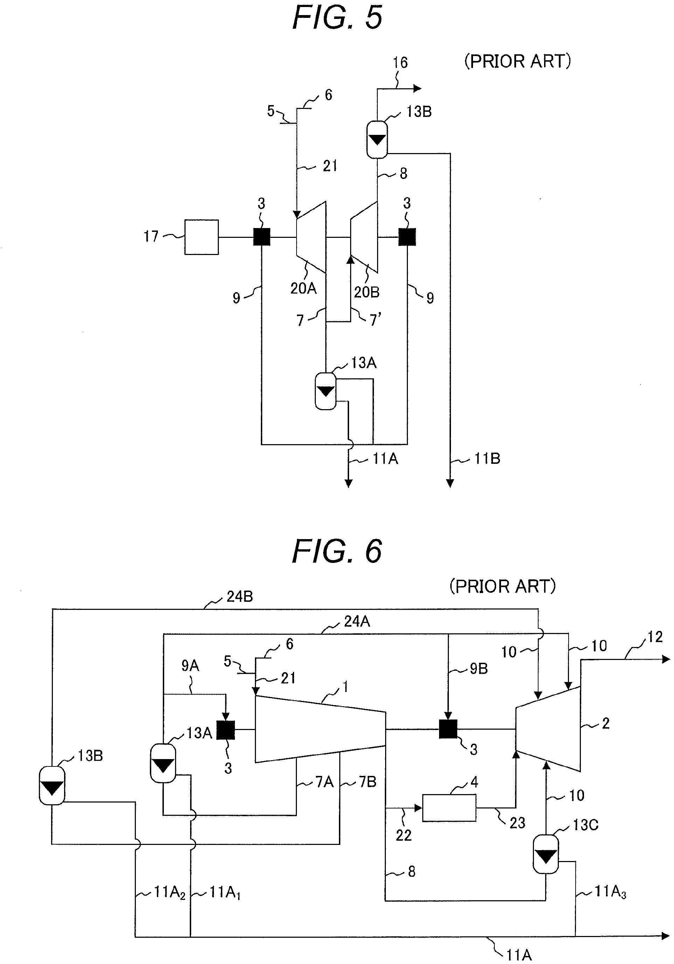

Next, the conventional embodiment (2) shown in Fig. 5 is a conventional centrifugal compressor. In this drawing, numerals 20A and 20B indicate a centrifugal compressor, and the centrifugal compressors 20A and 20B are placed side by side with each other and are driven by a compressor drive unit 17, and both ends of the rotary shaft are born by the bearings 3. Further, the air intake pipe system 21 for spraying the liquid 6 to the air 5 and sucking it into the compressor is connected to the centrifugal compressor 20A. Furthermore, the inter-stage drain capture pipe 7 of the compressor is connected to the centrifugal compressor 20A and in the lowermost portion thereof, the separator 13A for separating drain passing through the inter-stage drain capture pipe 7 of the compressor to compressed air and a liquid with dust mixed together is disposed. The liquid with dust mixed together which is separated by the separator 13A is discharged outside the compressor through the discharge pipe system 11A, and on the other hand, the compressed air separated by the separator 13A is fed to the bearings 3 via the seal air pipe systems 9 and is used as seal air for the bearings 3. Further, at the outlet of the centrifugal compressor 20B connected to a drain capture pipe 7' branching and extending from some part of the inter-stage drain capture pipe 7 of the compressor, an exit drain capture pipe 8 of the compressor is connected and in the lowermost portion thereof, the separator 13B for separating drain passing through the exit drain capture pipe 8 of the compressor to compressed air and a liquid with dust mixed together is disposed. The liquid with dust mixed together which is separated by the separator 13B is discharged outside the compressor through the discharge pipe system 11B, and on the other hand, the compressed air separated by the separator 13B is fed, for example, to equipment such as a chemical process via the equipment drive air extraction pipe system 16 and is used as equipment drive air.

Furthermore, the conventional embodiment (3) shown in Fig. 6 is a conventional gas turbine system. As shown in this drawing, the gas turbine system, except the drive source, is schematically composed of the axial flow compressor 1 similar to the conventional embodiment (1), a combustor 4 for burning compressed air 22 which is discharged to the exit drain capture pipe 8 of the compressor extending from the outlet of the axial flow compressor 1 and is branched and led from some part of the exit drain capture pipe 8 of the compressor and fuel, and a gas turbine 2 driven by combustion gas 23 burnt by the combustor 4. The axial flow compressor 1 aforementioned is driven by the gas turbine 2 and both ends of the rotary shaft are born by the bearings 3.

Further, in the conventional embodiment (3), between the stages of the axial flow compressor 1, two inter-stage drain capture pipes 7A and 7B of the compressor are connected and in the lowermost portions of the pipes, the separators 13A and 13B for separating drain passing through the inter-stage drain capture pipes 7A and 7B of the compressor to compressed air and a liquid with dust mixed together are disposed. The liquids with dust mixed together which are separated by the separators 13A and 13B are fed to the discharge pipe system 11A through respective discharge pipe systems 11A₁ and 11A₂ and are discharged outside the compressor. On the other hand, the compressed air separated by the separator 13A is discharged to a compressed air pipe system 24A, is fed to one of the bearings 3 via a seal air pipe system 9A branching from some part of the compressed air pipe system 24A, furthermore, is fed to the other bearing 3 via a seal air pipe system 9B branching from some part of the compressed air pipe system 24A, and is used as seal air for the respective bearings 3. The leading edge of the compressed air pipe system 24A is connected to the gas turbine 2 and the compressed air discharged from the separator 13A is led into the gas turbine 2 and is used as cooling air 10 for the blades. Further, the compressed air separated by the separator 13B is discharged to the compressed air pipe system 24B with the leading edge connected to the gas turbine 2 and the compressed air discharged from the separator 13B is led into the gas turbine 2 and is used as cooling air 10 for the blades.

Furthermore, in the conventional embodiment (3), in the lowermost portion of the exit drain capture pipe 8 of the compressor connected to the outlet of the axial flow compressor 1, a separator 13C for separating drain discharged from the axial flow compressor 1 to compressed air and a liquid with dust mixed together is disposed. The liquid with dust mixed together which is separated by the separator 13C is fed to the discharge pipe system 11A through a discharge pipe system 11A₃ and is discharged outside the compressor, and on the other hand, the compressed air separated by the separator 13C is led into the gas turbine 2 and is used as cooling air 10 for the blades.

### {Document of Prior Art}

{Patent Document 1} Japanese Patent Laid-open No. 2008-196399
{Patent Document 2} Japanese Patent Laid-open No. 2006-57607

### SUMMARY OF INVENTION

The separators 13A and 13B in the conventional embodiments (1) and (2) are generally structured so as to always discharge about 1/10 of entrance air of the separators 13A and 13B (holes for drawing out drain of about 1/10 of entrance air of the separators 13A and 13B are formed in the separators 13A and 13B and pipes are connected to them), and when a small amount of the liquid 6 gets mixed in the axial flow compressor 1 or the centrifugal compressors 20A and 20B, liquid drain is discharged out through the discharge pipe system 11 together with compressed air, so that seal air fed to the bearings 3 from the seal air pipe systems 9 or equipment drive air fed from the equipment drive air extraction pipe system 16 can keep the purity.

However, when the liquid 6 of a quantity exceeding the capacity of the separators 13A and 13B gets mixed in the axial flow compressor 1 or the centrifugal compressors 20A and 20B, a liquid (steam included) which cannot be separated and removed by the separators 13A and 13B flows into seal air for sealing the bearings 3 and equipment drive air, and moisture gets mixed in the lubricating oil of the bearings 3, and moisture gets mixed in the equipment drive air, thus there is a fear that the stable operation of the system may be inhibited.

Further, when a small amount of the liquid 6 gets mixed in the axial flow compressor 1 or the centrifugal compressors 20A and 20B and the purity of seal air for the bearings 3 and equipment drive air can be kept by the separators 13A and 13B or even under the condition that the liquid 6 does not get mixed in the axial flow compressor 1 or the centrifugal compressors 20A and 20B, in the separators 13A and 13B, a part of compressed air leaks outside the compressor, so the efficiency of the compressor reduces.

Furthermore, the pressure of the liquid discharged from the axial flow compressor 1 or the centrifugal compressors 20A and 20B reduces because of the structure that about 1/10 of entrance air of the separators 13A and 13B is always discharged, that is, the structure that it passes through a minute orifice. Therefore, when capturing the liquid discharged from the axial flow compressor 1 or the centrifugal compressors 20A and 20B, it is necessary to put it together at one place and transfer it by a transfer pump separately prepared and arranged and in correspondence to the pump power equipped, the efficiency of the system using the axial flow compressor 1 or the centrifugal compressors 20A and 20B reduces.

Next, the separators 13A, 13B, and 13C in the conventional embodiment (3) are generally structured so as to always discharge about 1/10 of entrance air of the separators 13A, 13B, and 13C (holes for drawing out drain of about 1/10 of entrance air of the separators 13A, 13B, and 13C are formed in the separators 13A, 13B, and 13C and pipes are connected to them), and when a small amount of the liquid 6 gets mixed in the axial flow compressor 1, liquid drain is discharged out through the discharge pipe system 11 together with compressed air, thus seal air fed to the bearings 3 from the seal air pipe systems 9A and 9B or the cooling air 10 for the blades of the gas turbine 2 can keep the purity.

However, when the liquid 6 of a quantity exceeding the capacity of the separators 13A, 13B, and 13C gets mixed in the axial flow compressor 1, a liquid (steam included) which cannot be separated and removed by the separators 13A, 13B, and 13C flows into seal air for sealing the bearings 3 and the cooling air 10 for the blades of the gas turbine 2, and if moisture gets mixed in the lubricating oil of the bearings 3 and the cooling air 10 with moisture mixed in flows to the blades of the gas turbine 2, destruction of the blades due to a temperature difference is a concern, thus there is a fear that the stable operation of the system may be inhibited.

Further, when a small amount of the liquid 6 gets mixed in the axial flow compressor 1 and the purity of seal air for the bearings 3 and the cooling air 10 for the blades of the gas turbine 2 can be kept by the separators 13A, 13B, and 13C or even under the condition that the liquid 6 does not get mixed in the axial flow compressor 1, in the separators 13A, 13B, and 13C, a part of compressed air leaks outside the compressor, so the efficiency of the compressor reduces.

Furthermore, the pressure of the liquid discharged from the axial flow compressor 1 reduces because of the structure that about 1/10 of entrance air of the separators 13A, 13B, and 13C is always discharged, that is, the structure that it passes through a minute orifice. Therefore, when capturing the liquid discharged from the axial flow compressor 1, it is necessary to put it together at one place and transfer it by a transfer pump separately prepared and arranged and in correspondence to the pump power equipped, the efficiency of the system using the axial flow compressor 1 reduces.

The present invention was developed with the foregoing viewpoint and an object of the present invention is to provide a drain discharge equipment of a compressor and a gas turbine system, even if the compressor or gas turbine is supposed to cause mixing-in of a liquid, capable of realizing a stable operation and high efficiency.

A drain discharge equipment of the compressor of the present invention, to accomplish the above object, having a separator for separating drain discharged from the compressor to compressed air and liquid drain, which is disposed on some part of a drain capture pipe connected between stages and/or to an outlet of the compressor to compress air with a liquid sprayed, and/or discharging the liquid drain separated by the separator to outside the compressor through a discharge pipe system, **characterized in that** the separator is provided with a device for intermittently discharging the liquid drain separated by the separator to the discharge pipe system.

Further, a gas turbine system of the present invention, to accomplish the above object, having a compressor for compressing air with a liquid sprayed, a combustor disposed on some part of a pipe branching from some part of a drain capture pipe connected to an outlet of the compressor for burning the compressed air from the compressor and fuel, and/or a turbine driven by combustion gas burned by the combustor, a separator for separating drain discharged from the compressor to compressed air and liquid drain, which is disposed on some part of the drain capture pipe connected between stages and/or to an outlet of the compressor, wherein the liquid drain separated by the separator is discharged to outside the compressor through the discharge pipe system and/or the compressed air separated by the separator is introduced to blades of the turbine as cooling air, **characterized in that** the separator is provided with a device for intermittently discharging the liquid drain separated by the separator to the discharge pipe system.

According to the present invention, drain discharge equipment of a compressor and a gas turbine system, even if the compressor or gas turbine is supposed to cause mixing-in of a liquid, capable of realizing a stable operation and high efficiency can be obtained.

### BRIEF DESCRIPTION OF DRAWINGS

Fig. 1 is a system diagram showing a first embodiment of the drain discharge equipment of the compressor of the present invention which is applied to the axial flow compressor,
Fig. 2 is a system diagram showing a second embodiment of the drain discharge equipment of the compressor of the present invention which is applied to the centrifugal compressor,
Fig. 3 is a system diagram showing a third embodiment of the gas turbine system of the present invention,
Fig. 4 is a system diagram showing a conventional drain discharge equipment of the compressor which is applied to the axial flow compressor,
Fig. 5 is a system diagram showing another conventional drain discharge equipment of the compressor which is applied to the centrifugal compressor, and
Fig. 6 is a system diagram showing a conventional gas turbine system.

### DETAILED DESCRIPTION OF THE INVENTION

Hereinafter, the present invention will be explained in detail on the basis of the embodiments drawn. Further, for the similar constitution to the conventional embodiment, the detailed explanation is omitted and with respect to the numerals, for the similar articles to the conventional, the same numerals are used.

### {Embodiment 1}

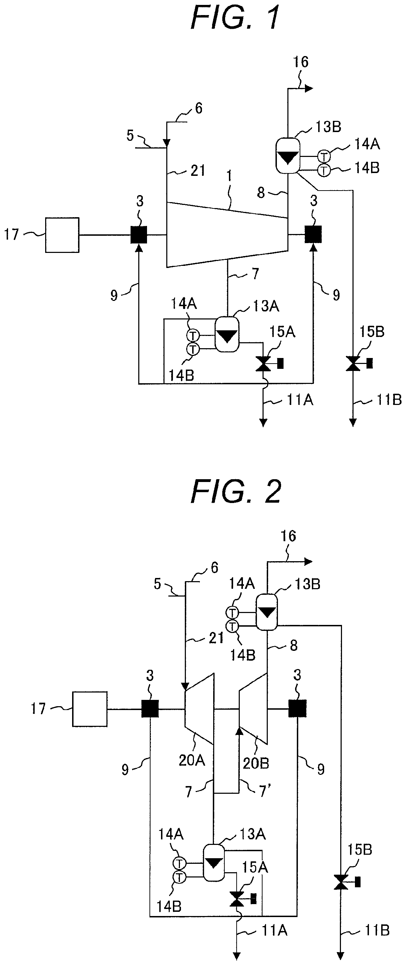

Fig. 1 is a drawing showing a first embodiment of the present invention which is applied to the axial flow compressor.

The embodiment 1 shown in the Fig. 1 has a constitution almost similar to that of the conventional embodiment (1) shown in Fig. 4. In the embodiment 1, the separator 13A is installed in the lowermost portion of the inter-stage drain capture pipe 7 of the compressor connected between the stages of the axial flow compressor 1 for separating drain passing through the inter-stage drain capture pipe 7 of the compressor to compressed air and a liquid with dust mixed together. The separator 13B is installed in the lowermost portion of the exit drain capture pipe 8 of the compressor connected to the outlet of the axial flow compressor 1 for separating drain passing through the exit drain capture pipe 8 of the compressor to compressed air and a liquid with dust mixed together. And the level sensors 14A and 14B for detecting the liquid quantities flowing into the separators 13A and 13B are disposed and so as to prevent an operation exceeding the capacity of the separators 13A and 13B, on some part of the discharge pipe systems 11A and 11B, on the liquid drain pipes (liquid transfer pipes), drain discharge valves 15A and 15B for operating working together with the level sensors 14A and 14B are installed.

According to such a constitution of the embodiment 1, even if the liquid 6 of a quantity exceeding the capacity of the separators 13A and 13B gets mixed in the axial flow compressor 1, the quantity of the liquid 6 can be detected by the level sensors 14A and 14B, and if the detection quantity by the level sensors 14A and 14B is a quantity exceeding the capacity of the separators 13A and 13B (when it exceeds a predetermined value), an intermittent operation for opening the drain discharge valves 15A and 15B operated working together with the level sensors 14A and 14B are performed, thus the drain can be discharged to the discharge pipe systems 11A and 11B and the liquid quantity inside the separators 13A and 13B can be kept appropriately.

Therefore, the drain can be separated appropriately to compressed air and a liquid with dust mixed in by the separators 13A and 13B, and a liquid which cannot be separated by the separators 13A and 13B does not flow into the seal air for sealing the bearings 3 and the equipment drive air, and a fear of inhibiting the stable operation of the system due to moisture getting mixed in the lubricating oil of the bearings 3 and moisture getting mixed in the equipment drive air is eliminated, and a stable operation of the axial flow compressor 1 can be performed.

Further, in the conventional embodiment (1), due to the stationary leak of compressed air from the separators 13A and 13B, a reduction effect of the axial flow compressor 1 is caused. Therefore, in the embodiment 1, the level sensors 14A and 14B are separately disposed on the upper portion and lower portion of the separators 13A and 13B for sensing the quantity of the liquid in the separators 13A and 13B and controlling the drain discharge valves 15A and 15B are controlled so as to discharge only the liquid in the separators 13A and 13B.

By use of this system, the leak of compressed air from the separators 13A and 13B can be brought close to zero and the efficiency of the axial flow compressor 1 can be improved.

Furthermore, in the conventional embodiment (1), a liquid discharged from the axial flow compressor 1 becomes low in pressure, so that a transfer pump separately installed is necessary, though in the embodiment 1, the drain discharge valves 15A and 15B disposed on some part of the discharge pipe systems 11A and 11B between the stages and at the outlet of the axial flow compressor 1 are fully born, that is, valve holes with the same diameter as that of the pipe are formed, and switching drain is discharged into the valve holes, thus a state that the inner pressure of the compressor is directly applied to the liquid is created.

By doing this, the liquid in the separators 13A and 13B can be subjected to pressure transfer by the upstream pressure of each of the drain discharge valves 15A and 15B, so that the transfer pump separately installed is not necessary and the efficiency of the axial flow compressor 1 can be improved.

### {Embodiment 2}

Fig. 2 is a drawing showing a second embodiment of the present invention which is applied to the centrifugal compressor.

The embodiment 2 shown in Fig. 2 has a constitution almost similar to that of the conventional embodiment (2) shown in Fig. 5. In the embodiment 2, the separator 13A is installed in the lowermost portion of the inter-stage drain capture pipe 7 of the compressor connected between the stages of the axial flow compressor 1 for separating drain passing through the inter-stage drain capture pipe 7 of the compressor to compressed air and a liquid with dust mixed together. The separator 13B is installed in the lowermost portion of the exit drain capture pipe 8 of the compressor connected to the outlet of the axial flow compressor 1 for separating drain passing through the exit drain capture pipe 8 of the compressor to compressed air and a liquid with dust mixed together. And the level sensors 14A and 14B for detecting the liquid quantities flowing into the separators 13A and 13B are disposed and so as to prevent an operation exceeding the capacity of the separators 13A and 13B, on some part of the discharge pipe systems 11A and 11B, on the liquid drain pipes (liquid transfer pipes), drain discharge valves 15A and 15B for operating working together with the level sensors 14A and 14B are installed.

By use of such a constitution of the embodiment 2, the operation effect similar to that of the embodiment 1 aforementioned can be obtained and the stable operation of the centrifugal compressors 20A and 20B and the efficiency improvement can be realized.

### {Embodiment 3}

Fig. 3 is a drawing showing a third embodiment of the present invention which is applied to the gas turbine system.

The embodiment 3 shown in Fig. 3 has a constitution almost similar to that of the conventional embodiment (3) shown in Fig. 6. In the embodiment 3, in the separators 13A and 13B installed in the lowermost portions of the two inter-stage drain capture pipes 7A and 7B of the compressor connected between the stages of the axial flow compressor 1 for separating drain passing through the inter-stage drain capture pipes 7A and 7B of the compressor to compressed air and a liquid with dust mixed together. the separator 13C is installed in the lowermost portion of the exit drain capture pipe 8 of the compressor connected to the outlet of the axial flow compressor 1 for separating drain discharged from the axial flow compressor 1 to compressed air and a liquid with dust mixed together. And the level sensors 14A and 14B for detecting the liquid quantities flowing into the separators 13A, 13B and 13C are disposed and so as to prevent an operation exceeding the capacity of the separators 13A, 13B, and 13C, on some part of the discharge pipe systems 11A₁, 11A₂, and 11A₃, on the liquid drain pipes (liquid transfer pipes), the drain discharge valves 15A, 15B, and 15C for operating working together with the level sensors 14A and 14B are installed.

According to such a constitution of the embodiment 3, even if the liquid 6 of a quantity exceeding the capacity of the separators 13A, 13B, and 13C gets mixed in the axial flow compressor 1, the quantity of the liquid 6 can be detected by the level sensors 14A and 14B, and if the detection quantity by the level sensors 14A and 14B is a quantity exceeding the capacity of the separators 13A, 13B, and 13C (when it exceeds a predetermined value), an intermittent operation for opening the drain discharge valves 15A and 15B operated working together with the level sensors 14A and 14B are performed, thus the drain can be discharged to the discharge pipe system 11A and the liquid quantity inside the separators 13A and 13B can be kept appropriately.

Therefore, the drain can be separated appropriately to compressed air and a liquid with dust mixed in by the separators 13A, 13B, and 13C, and a liquid which cannot be separated by the separators 13A, 13B, and 13C does not flow into the seal air for sealing the bearings 3 and the cooling air 10 for the blades of the gas turbine 2, "and a fear of destruction of the blades due to a temperature difference caused by moisture getting mixed in the lubricating oil of the bearings 3 and the cooling air 10 with moisture mixed in flows to the blades of the gas turbine 2 is eliminated, and a fear of inhibiting the stable operation of the system is eliminated, and a stable operation of the gas turbine system can be performed. Further, the other effects are similar to those of the embodiments 1 and 2.

Further, in each embodiment aforementioned, the level sensors separately disposed at two locations on the upper portion and lower portion of the separator 13A, 13B, or 13C are explained. However, a sensor for detecting the uppermost position of the liquid level in the separator 13A, 13B, or 13C and a sensor for detecting the lowered position of the liquid level are necessary at its minimum limit, though the number of sensors is not limited particularly.

Further, level sensors having the function of a drain discharge valve may be used.

Further, in each embodiment aforementioned, the embodiment using the level sensors is explained, though if the liquid level of the separator is detected using a float in place of the level sensors and the drain discharge valve is automatically opened or closed, the similar effects can be obtained.

Further, the present invention can be applied to water and deionized water and if the level sensors are changed (an electrostatic capacity sensor, an optical sensor, and others are available and they are changed depending on use), the present invention can be applied to a slurry (a mixture of a liquid and solids) or a liquid containing solid particles as the liquid drain.

Furthermore, the present invention can be applied to a gas compression system using the aforementioned axial flow compressor or centrifugal compressor.

## Claims

1. A drain discharge equipment of a compressor having a separator (13A, 13B) for separating drain discharged from the compressor to compressed air and liquid drain, which is disposed on some part of a drain capture pipe (7, 8) connected between stages and/or to an outlet of the compressor to compress air with a liquid sprayed, and discharging the liquid drain separated by the separator (13A, 13B) to outside the compressor through a discharge pipe system (11A, 11B),
**characterized in that**
the separator (13A, 13B) is provided with a device for intermittently discharging the liquid drain separated by the separator (13A, 13B) to the discharge pipe system (11A, 11B).

2. The drain discharge equipment of a compressor according to Claim 1, wherein:
the device for intermittently discharging the liquid drain separated by the separator (13A, 13B) to the discharge pipe system (11A, 11B) is comprising a level sensor (14A, 14B) for detecting a liquid quantity flowing into the separator (13A, 13B) and a drain discharge valve (15A, 15B) installed on some part of the discharge pipe system (11A, 11B) to operate together with the level sensor (14A, 14B).

3. The drain discharge equipment of a compressor according to Claim 2, wherein:
the level sensor (14A, 14B) opens the drain discharge valve (15A, 15B) and discharges the liquid drain to the discharge pipe system (11A, 11B) when the liquid quantity of the separator (13A, 13B) exceeds a predetermined value.

4. The drain discharge equipment of a compressor according to Claim 1, wherein:
the device for intermittently discharging the liquid drain separated by the separator (13A, 13B) to the discharge pipe system (11A, 11B) is a level sensor (14A, 14B) for detecting the liquid quantity flowing into the separator (13A, 13B) and serving as a drain discharge valve (15A, 15B) for operating according to the detected liquid quantity.

5. The drain discharge equipment of a compressor according to at least one of Claims 1 to 4, wherein:
the compressed air separated by the separator (13A, 13B) is introduced into seal air for a bearing (3) for bearing a rotary shaft of the compressor and/or equipment drive air.

6. The drain discharge equipment of a compressor according to at least one of Claims 1 to 5, wherein:
the separator (13A, 13B) is installed in a lower portion of the drain capture pipe (7, 8).

7. The drain discharge equipment of a compressor according to at least one of Claims 1 to 6, wherein:
the compressor is an axial flow compressor or a centrifugal compressor.

8. The drain discharge equipment of a compressor according to at least one of Claims 1 to 7, wherein:
the liquid drain separated by the separator (13A, 13B) is water, a slurry or liquid containing solid particles.

9. A gas turbine system having a compressor for compressing air with a liquid sprayed, a combustor disposed on some part of a pipe branching from some part of a drain capture pipe (8) connected to an outlet of the compressor for burning the compressed air from the compressor and fuel,
and a turbine driven by combustion gas burned by the combustor, a separator (13A, 13B) for separating drain discharged from the compressor to compressed air and liquid drain, which is disposed on some part of the drain capture pipe (7, 8) connected between stages and/or to an outlet of the compressor, wherein the liquid drain separated by the separator (13A, 13B) is discharged to outside the compressor through the discharge pipe system (11A, 11B) and the compressed air separated by the separator (13A, 13B) is introduced to blades of the turbine as cooling air,
**characterized in that**
the separator (13A, 13B) is provided with a device for intermittently discharging the liquid drain separated by the separator to the discharge pipe system.

10. The gas turbine system according to Claim 9, wherein:
the device for intermittently discharging the liquid drain separated by the separator (13A, 13B) to the discharge pipe system (11A, 11B) is provided with a level sensor (14A, 14B) for detecting a liquid quantity flowing into the separator (13A, 13B) and a drain discharge valve (15A, 15B) installed on some part of the discharge pipe system (11A, 11B) to operate together with the level sensor (14A, 14B).

11. The gas turbine system according to Claim 10, wherein:
the level sensor (14A, 14B) opens the drain discharge valve (15A, 15B) and discharges the liquid drain to the discharge pipe system (11A, 11B) when the liquid quantity of the separator (13A, 13B) exceeds a predetermined value.

12. The gas turbine system according to Claim 9, wherein:
the device for intermittently discharging the liquid drain separated by the separator (13A, 13B) to the discharge pipe system (11A, 11B) is provided with a level sensor (14A, 14B) for detecting the liquid quantity flowing into the separator (13A, 13B) and serving as a drain discharge valve (15A, 15B) for operating according to the liquid quantity detected.

13. The gas turbine system according to at least one of Claims 9 to 12,
wherein:
the compressed air separated by the separator (13A, 13B) is introduced into seal air for a bearing (3) for bearing a rotary shaft of the compressor.

14. The gas turbine system according to at least one of Claims 9 to 12,
wherein:
two drain capture pipes (7A, 7B) are connected between the stages of the compressor, and on some part of each of the drain capture pipes (7A, 7B), the separator (13A, 13B) for separating the drain discharged from the compressor to compressed air and liquid drain is disposed, and the liquid drain separated by the separator (13A, 13B) disposed on some part of either of the drain capture pipes (7A, 7B) is discharged outside the compressor through the discharge pipe system (11A), and the compressed air separated by the separator (13A, 13B) is introduced into a bearing (3) for bearing a rotary shaft of the compressor as seal air and is introduced to the blades of the turbine as cooling air, and the liquid drain separated by the separator (13C) disposed on some part of another of the drain capture pipes (8) is discharged outside the compressor through the discharge pipe system (11A), and the compressed air separated by the separator (13C) is introduced the blades of the turbine as cooling air.

15. The gas turbine system according to at least one of Claims 9 to 14,
wherein:
the separator (13) is installed in a lower portion of the drain capture pipe (7, 8).
